# EUROPÄISCHE PATENTANMELDUNG

(11) **EP 3 878 890 A1**
(43) Veröffentlichungstag der Anmeldung: **15.09.2021**
(21) Anmeldenummer: 21157679.8
(22) Anmeldetag: 17.02.2021
(51) Int. Cl.: C08G 77/20, C08G 77/26

(54) **ZUBEREITUNG ZUR HERSTELLUNG EINES DURCH KONDENSATIONSREAKTION VERNETZBAREN POLYMERS, DURCH KONDENSATIONSREAKTION VERNETZBARE POLYMERMASSE, VERFAHREN ZUR HERSTELLUNG EINES SILIKONELASTOMERS UND SILIKONELASTOMER**

(30) Priorität: 09.03.2020 DE 102020202971
(71) Anmelder: Hechtl, Wolfgang, 84489 Burghausen (DE)
(72) Erfinder: Hechtl, Wolfgang, 84489 Burghausen (DE)
(74) Vertreter: Hoefer & Partner Patentanwälte mbB

(57) **Zusammenfassung**

Die Erfindung betrifft eine Zubereitung zur Herstellung eines durch Kondensationsreaktion vernetzbaren Polymers, die mindestens ein Aminopropyltriethoxysilan und mindestens ein Polydialkylsiloxan mit zwei endständigen Hydroxylgruppen enthält, wobei das Polydialkylsiloxan durch nachfolgende Formel (1) dargestellt ist:

HO-[-SiR₁R₂-O-]ₓ-OH Formel (1)

wobei in Formel (1) R₁ und R₂ gleich oder unterschiedlich sein können und ausgewählt sind aus Alkylgruppen mit 1 bis 8 Kohlenstoffatomen und wobei x eine ganze Zahl von 30 bis 2500 ist.

## Beschreibung

Die vorliegende Erfindung betrifft eine Zubereitung zur Herstellung eines durch Kondensationsreaktion vernetzbaren Polymers, eine durch Kondensationsreaktion vernetzbare Polymermasse, ein Verfahren zur Herstellung eines Silikonelastomers sowie ein durch das Verfahren hergestelltes Silikonelastomer.

Silikonelastomere zeichnen sich durch sehr gute weich-elastische Eigenschaften aus. Es wurde versucht, Silikonelastomere durch Kaltvernetzung von hydroxyendständigen Polydimethylsiloxanen mit Ethoxysilanen herzustellen, wobei die Vulkanisation durch Einwirkung der Luftfeuchtigkeit stattfindet. Es stellte sich jedoch heraus, dass auch unter Ausschluss der Luftfeuchtigkeit eine Versteifung oder gar Aushärtung nicht verhindert werden kann. Damit war die Herstellung einer unter Ausschluss von Luftfeuchtigkeit lagerfähigen Polymermasse bislang nicht möglich. Aus DE 10 2007 037 197 A1 ist ein Verfahren zur Herstellung eines Silikonelastomers bekannt, bei dem eine Umsetzung von Polydimethylsiloxanen mit endständigen Hydroxylgruppen mit Triethoxysilanen erfolgt, die als vierten Substituent einen Stickstoff-Heterozyklus enthalten. Die Herstellung dieses spezifischen Triethoxysilans ist jedoch aufgrund der Inkorporation des Heterozyklus aufwendig und kostspielig.

Ausgehend von diesem Stand der Technik ist es eine Aufgabe der vorliegenden Erfindung eine Zubereitung zur Herstellung eines durch Kondensationsreaktion vernetzbaren Polymers bereitzustellen, die unter Ausschluss von Feuchtigkeit lagerstabil ist. Darüber hinaus ist es eine Aufgabe der vorliegenden Erfindung eine durch Kondensationsreaktion vernetzbare Polymermasse bereitzustellen, die unter Einwirkung von Feuchtigkeit unter Freisetzung von Ethanol vulkanisiert und mittels der ein Silikonelastomer mit sehr guten mechanischen und physikalischen Eigenschaften herstellbar ist. Ferner ist es eine Aufgabe der vorliegenden Erfindung ein einfaches und kostengünstiges Verfahren zur Herstellung eines Silikonelastomers sowie ein durch das Verfahren hergestelltes Silikonelastomer bereitzustellen, wobei sich das Silikonelastomer durch sehr gute mechanische und physikalische Eigenschaften auszeichnet.

Die vorliegende Erfindung ist durch die Merkmale der unabhängigen Ansprüche gekennzeichnet. Die Unteransprüche haben vorteilhafte Weiterbildungen zum Inhalt.

Demnach betrifft die vorliegende Erfindung gemäß einem ersten Aspekt eine Zubereitung zur Herstellung eines durch Kondensationsreaktion vernetzbaren Polymers. Die Zubereitung enthält mindestens ein Aminopropyltriethoxysilan und
mindestens ein Polydialkylsiloxan mit zwei endständigen Hydroxylgruppen. Das Polydialkylsiloxan hat die nachfolgende Formel (1):

HO-[-SiR₁R₂-O-]ₓ-OH Formel (1)

wobei in Formel (1) R₁ und R₂ gleich oder unterschiedlich sein können und ausgewählt sind aus Alkylgruppen mit 1 bis 8 Kohlenstoffatomen und wobei x eine ganze Zahl von 30 bis 2500 ist. Das Polydialkylsiloxan hat vorzugsweise eine Viskosität bei 23°C, gemessen nach ISO 3219 des Jahres 1993, von 20.000 bis 350.000 mPa·s, wodurch sich die Einarbeitung des Aminopropyltriethoxysilans verbessert, so dass eine homogene Masse erarbeitet werden kann. Des Weiteren vorteilhaft ist das Polydialkylsiloxan Polydimethylsiloxan.

Die Zubereitung kann durch einfaches Vermengen der vorstehend genannten Komponenten erhalten werden und ist unter Feuchtigkeitsausschluss über einen langen Zeitraum lagerbar, ohne sich zu verändern, zu zersetzen oder zu reagieren. So kann die Zubereitung einfach hergestellt und zur Herstellung eines durch Kondensationsreaktion vernetzbaren Polymers verwendet werden. Dabei kann die Zubereitung weitere Komponenten enthalten, sofern diese eine vorzeitige Reaktion der enthaltenen, erfindungswesentlichen Komponenten nicht auslösen oder unterhalten.

Aufgrund sehr guter Verfügbarkeit und hoher Reaktivität in Polymerisationsreaktionen durch Kondensation, ist das Aminopropyltriethoxysilan vorzugsweise ausgewählt aus 3-Aminopropyltriethoxysilan, Cyclohexylaminopropyltriethoxysilan und N-(2-Aminoethyl)-3-aminopropyltriethoxysilan.

Um eine stabile Zubereitung mit hohem Reaktionspotential zu erhalten, beträgt ein Masseverhältnis des Polydialkylsiloxans zum Aminopropyltriethoxysilan vorzugsweise 20 : 1 bis 50 : 1. Ein Masseverhältnis von etwa 31 : 1 bis 36 : 1 ist dabei besonders vorteilhaft.

Zur Verbesserung der elastischen Eigenschaften des herzustellenden Silikonelastomers, enthält die Zubereitung vorzugsweise mindestens einen Silikonweichmacher, wobei der Silikonweichmacher insbesondere ausgewählt ist aus trimethylsiloxyendständigen Polydimethylsiloxanen mit einer Viskosität bei 23 °C, gemessen nach ISO 3219 von 1993, von 35 bis 1000 mPa·s.

Als weiterer erfindungsgemäßer Aspekt wird auch eine durch Kondensationsreaktion vernetzbare Polymermasse beschrieben. Die erfindungsgemäße Polymermasse enthält dabei die vorstehend beschriebene erfindungsgemäße und lagerstabile Zubereitung. Darüber hinaus enthält die Polymermasse mindestens ein ethoxyfunktionales Vernetzungsmittel zum Vernetzen des in der Zubereitung enthaltenen Polydialkylsiloxans, wobei das Vernetzungsmittel insbesondere mindestens ein ethoxyfunktionales siliziumhaltiges Vernetzungsmittel ist, um die Silikoneigenschaften weiter zu verbessern. Des Weiteren enthält die Polymermasse mindestens ein weiteres Aminopropyltriethoxysilan, das zu dem in der Zubereitung enthaltenen Aminopropyltriethoxysilan gleich oder unterschiedlich sein kann. Die Polymermasse ist unter Ausschluss von Feuchtigkeit weiterhin stabil, kann aber bei Einwirkung von Feuchtigkeit (Luftfeuchtigkeit oder Zusatz von Wasser) zu einem Silikonelastomer abreagieren, wobei zumindest das Aminopropyltriethoxysilan mit dem Polydialkylsiloxan aus der Zubereitung und dem ethoxyfunktionalen Vernetzungsmittel unter Bildung eines Silikonelastomers durch Kondensationsreaktion reagiert. Das aus der Polymermasse entstehende Silikonelastomer zeichnet sich durch weich-elastische Eigenschaften sowie gute mechanische und physikalische Eigenschaften aus. Dabei kann die Polymermasse weitere funktionale Komponenten enthalten, wie z.B. Färbemittel, Polymerisationsinhibitoren, Füllstoffe, Pigmente oder Duftstoffe.

Aufgrund sehr guter vernetzender Eigenschaften ist das ethoxyfunktionale Vernetzungsmittel vorzugsweise ausgewählt aus Methyltriethoxysilan, Vinyltriethoxysilan, Tetraethylsilikat, einem Teilhydrolysat von Tetraethylsilikat und 1,2-Bis-(triethoxysilyl)ethan.

Um die mechanischen und physikalischen Eigenschaften des Silikonelastomers anzupassen, kann die Polymermasse vorzugsweise ferner mindestens einen Füllstoff enthalten. Darüber hinaus kann zur Beschleunigung der Polymerisationsreaktion alternativ oder additiv mindestens ein Vernetzungskatalysator vorgesehen sein.

Geeignete Füllstoffe umfassen dabei insbesondere Quarz bzw. Quarzmehl, Kreide, Diatomeenerde, Calciumsilikat, Titanoxid, Eisenoxid, Zinkoxid, Calciumcarbonat, pyrogen hergestellte, hochdisperse Kieselsäure, gefällte Kieselsäure und Russ.

Geeignete Vernetzungskatalysatoren umfassen Titanverbindungen, Zirkoniumverbindungen, Zinkverbindungen, Aluminiumverbindungen oder Zinnverbindungen.

Als besonders geeigneter Füllstoff hat sich hochdisperse Kieselsäure herausgestellt, da diese die mechanische Festigkeit des Silikonelastomers erhöht, wie z.B. die Weiterreissfestigkeit nach ASTM D624-00 (2012). Als Vernetzungskatalysator hat sich insbesondere Zink-bis(2-ethylhexanoat) bewährt, da es eine hohe Reaktivität besitzt, käuflich leicht erwerbbar und toxikologisch offensichtlich unbedenklich ist im Gegensatz von in Gebrauch befindlichen Zinnkatalysatoren.

Als weiterer erfindungsgemäßer Aspekt wird ein Verfahren zur Herstellung eines Silikonelastomers beschrieben. Das Verfahren umfasst hierbei zunächst einen Schritt des Herstellens einer Zubereitung zur Herstellung eines durch Kondensationsreaktion vernetzbaren Polymers. Die Zubereitung kann dabei wie die vorstehend offenbarte Zubereitung ausgebildet sein und durch Mischen hergestellt werden. Die Zubereitung enthält somit mindestens ein Aminopropyltriethoxysilan und mindestens ein Polydialkylsiloxan mit zwei endständigen Hydroxylgruppen, das die nachfolgende Formel (1) aufweist:

HO-[-SiR₁R₂-O-]ₓ-OH Formel (1)

wobei in Formel (1) R₁ und R₂ gleich oder unterschiedlich sein können und ausgewählt sind aus Alkylgruppen mit 1 bis 8 Kohlenstoffatomen und wobei x eine ganze Zahl von 30 bis 2500 ist. Die auf diese Weise erhaltene Zubereitung ist unter Feuchtigkeitsausschluss lagerstabil und muss in einem nächsten Verfahrensschritt unter Ausschluss von Feuchtigkeit bei Raumtemperatur für einen Zeitraum von mindestens 9 Tagen bis 12 Wochen gelagert werden, bevor sie weiterverarbeitet werden kann. Insbesondere ist eine Lagerzeit von etwa zwei Wochen vorteilhaft, während Lagerzeiten von weniger als 9 Tagen nicht ausreichend sind. Der Grund für das Lagern besteht, ohne an die Theorie gebunden zu sein, vermutlich darin, dass die Umsetzung des Aminopropyltriethoxysilans mit den Hydroxylendgruppen des Polydialkylsiloxans sehr langsam abläuft und es daher vorteilhaft ist, einen weitgehenden Umsetzungsgrad abzuwarten. Eine verfrühte Verwendung der Zubereitung zur Herstellung der Polymermasse verursacht eine Versteifung oder gar eine Aushärtung, so dass die Abfüllung in ein feuchtigkeitsdichtes Gebinde nicht möglich ist. Es ist vermutlich notwendig, die Hydroxylendgruppen weitgehend zu entfernen, um eine erwünschte, unter

Feuchtigkeitsausschluss bezüglich der pastösen Konsistenz lagerstabile Polymermasse zu erzielen.

In einem weiteren Verfahrensschritt wird zu der gelagerten Zubereitung mindestens ein ethoxyfunktionales Vernetzungsmittel zugefügt, das insbesondere mindestens ein ethoxyfunktionales siliziumhaltiges Vernetzungsmittel ist, das insbesondere ausgewählt ist aus Methyltriethoxysilan, Vinyltriethoxysilan, Tetraethylsilikat, einem Teilhydrolysat von Tetraethylsilikat und 1,2-Bis-(triethoxysilyl)ethan. Darüber hinaus wird mindestens ein weiteres Aminopropyltriethoxysilan zu der gelagerten Zubereitung zugefügt, wobei das Aminopropyltriethoxysilan zu dem in der Zubereitung enthaltenen Aminopropyltriethoxysilan gleich oder unterschiedlich sein kann. Durch diese Mischung wird eine Reaktionsmischung für die sich anschließende Polymerisationsreaktion erhalten, die als Kondensationsreaktion ausgeführt wird.

So erfolgt in einem weiteren Verfahrensschritt ein Reagieren der Reaktionsmischung unter Einfluss von Feuchtigkeit mittels Kondensation des aminfunktionalisierten Polydialkylsiloxans, des Aminopropyltriethoxysilans und des ethoxyfunktionalen Vernetzungsmittels. Die Feuchtigkeit kann dabei insbesondere durch Luftfeuchtigkeit eingetragen werden, was eine besonders gleichmäßige Polymerisationsreaktion begünstigt. Alternativ dazu kann auch eine definierte Menge an Wasser zugefügt werden.

Durch das Verfahren ist auf einfache und kosteneffiziente Weise ein Silikonelastomer mit sehr guten weich-elastischen, physikalischen und mechanischen Eigenschaften herstellbar. Das erfindungsgemäß Verfahren ist dabei ohne hohen technischen Aufwand umsetzbar.

Zur Verbesserung der Reaktionsgeschwindigkeit kann das Verfahren ferner einen Schritt des Zufügens mindestens eines Vernetzungskatalysators zu der gelagerten Zubereitung umfassen.

Die für die vorstehend offenbarte erfindungsgemäße Zubereitung, Polymermasse und das erfindungsgemäße Verfahren dargelegten Vorteile, vorteilhaften Effekte und Weiterbildungen finden jeweils wechselseitig Anwendung.

Als weiterer erfindungsgemäßer Aspekt wird auch ein Silikonelastomer beschrieben, das durch das erfindungsgemäße Verfahren herstellbar ist. Es zeichnet sich dadurch aus, dass durch Kondensation mindestens das Polydialkylsiloxan, das Aminopropyltriethoxysilan und das ethoxyfunktionale Vernetzungsmittel miteinander verbunden sind, wobei das ethoxyfunktionale Vernetzungsmittel insbesondere aus Methyltriethoxysilan, Vinyltriethoxysilan, Tetraethylsilikat, einem Teilhydrolysat von Tetraethylsilikat und 1,2-Bis-(triethoxysilyl)ethan ausgewählt ist. Hierdurch werden im Silikonelastomer weich-elastische Strukturen erzeugt und sehr gute physikalische und mechanische Eigenschaften, wie z.B. eine geringe ShoreA Härte erhalten.

Das Silikonnetzwerk bildet sich durch Reaktion der Hydroxyendgruppen des Polydialkylsiloxans mit den Ethoxygruppen des Vernetzers, wobei die Hydroxylendgruppen durch die Einwirkung von Feuchtigkeit gebildet werden. Das Polymer verliert damit seine freie Beweglichkeit. Damit geht die Fließfähigkeit der Polymermasse verloren. Ein Dialkylpolysiloxan mit einer Viskosität von 80.000 mPa·s weist durchschnittlich etwa 1000 Dimethylsiloxaneinheiten auf. Die Polymerketten liegen im unvernetzten als auch im vernetzten Zustand nicht gestreckt, sondern ungeordnet und verkneuelt vor. Die Wechselwirkung der Polymerketten zueinander ist sehr gering. Schon bei geringer Krafteinwirkung lässt sich das Netzwerk deformieren, nach Beendigung der Krafteinwirkung wird der ursprüngliche, ungeordnete Zustand wieder hergestellt. Die fließfähige bzw. weichpastöse Polymermasse ist damit umgewandelt in ein weichelastisches Elastomer.

### Beispiele

Die vorliegende Erfindung wird anhand von Beispielen näher erläutert, ist aber nicht auf die Beispiele beschränkt.

### Beispiel 1 - Herstellung einer ersten Zubereitung zur Herstellung eines durch Kondensationsreaktion vernetzbaren Polymers

Die nachfolgenden Komponenten wurden in ein Schraubdeckelgefäß eingewogen und miteinander mittels einer schmalen Spachtel vermengt und unter Feuchtigkeitsausschluss für zwei Wochen bei Raumtemperatur (22 °C) gelagert:
- 141,7 g eines Hydroxylgruppen endständigen Polydimethylsiloxans mit einer Viskosität von ca. 80.000 mPa·s (73,15 Masse%), gemessen bei 23°C gemäß ISO 3219 von 1993 (IUPAC: PDMS hydroxyterminated, CAS: 70131-67-8)
- 47,7 g eines Silikonweichmachers mit einer Viskosität von ca. 100 mPa·s (24,63 Masse%), gemessen bei 23°C gemäß ISO 3219 von 1993 (IUPAC: PDMS methlyterminated, CAS: 63148-62-9
- 4,3 g Aminopropyltriethoxysilan (2,22 Masse%) (IUPAC: 3-Aminopropyltriethoxysilane, CAS: 919-30-2).

### Beispiel 2 - Herstellung einer zweiten Zubereitung zur Herstellung eines durch Kondensationsreaktion vernetzbaren Polymers

Die nachfolgenden Komponenten wurden in ein Schraubdeckelgefäß eingewogen und miteinander mittels einer schmalen Spachtel vermengt und unter Feuchtigkeitsausschluss für zwei Wochen bei Raumtemperatur (22 °C) gelagert:
- 241,1 g eines Hydroxylgruppen endständigen Polydimethylsiloxans mit einer Viskosität von ca. 80.000 mPa·s (72,99 Masse%), gemessen bei 23°C gemäß ISO 3219 von 1993 (IUPAC: PDMS hydroxyterminated, CAS: 70131-67-8)
- 81,6 g eines Silikonweichmachers mit einer Viskosität von ca. 100 mPa·s (24,40 Masse%), gemessen bei 23°C gemäß ISO 3219 von 1993 (IUPAC: PDMS methlyterminated, CAS: 63148-62-9)
- 7,6 g 2-Aminoethyl-3-aminopropyltriethoxysilan (2,30 Masse%) (IUPAC: 2-Aminoethyl-3-aminopropyltriethoxysilan, CAS: 5089-72-5).

### Beispiel 3 - Herstellung einer dritten Zubereitung zur Herstellung eines durch Kondensationsreaktion vernetzbaren Polymers

Die nachfolgenden Komponenten wurden in ein Schraubdeckelgefäß eingewogen und miteinander mittels einer schmalen Spachtel vermengt und unter Feuchtigkeitsausschluss für zwei Wochen bei Raumtemperatur (22 °C) gelagert:
- 329,1 g eines hydroxylendstandiges Polydimethylsiloxan mit einer Viskosität von ca. 80 000 mPa·s (73,20 Masse%), gemessen bei 23°C gemäß ISO 3219 von 1993 (IUPAC: PDMS hydroxyterminated, CAS: 70131-67-8)
- 110,5 g eines Silikonweichmachers mit einer Viskosität von ca. 100 mPa·s (24,58 Masse %), gemessen bei 23°C gemäß ISO 3219 von 1993 (IUPAC: PDMS methylterminated, CAS: 63148-62-9)
- 10,0 g Aminopropyltriethoxysilan (2,22 Masse %) (IUPAC: 3-Aminopropyltriethoxysilane, CAS: 919-30-2).

### Beispiel 4 - Herstellung einer vierten Zubereitung zur Herstellung eines durch Kondensationsreaktion vernetzbaren Polymers

Die nachfolgenden Komponenten wurden in ein Schraubdeckelgefäß eingewogen und miteinander mittels einer schmalen Spachtel vermengt und unter Feuchtigkeitsausschluss für zwei Wochen bei Raumtemperatur (22 °C) gelagert:
- 176,5 g eines hydroxylendstaendigen Polydimethylsiloxans mit einer Viskosität von ca. 80 000 mPas·s (73,51 Masse %), gemessen bei 23 °C gemäß ISO 3219 von 1993 (IUPAC: PDMS hydroxyterminated, CAS: 70131-67-8)
- 59,2 g eines Silikonweichmachers mit einer Viskosität von ca. 100 mPa·s (24,66 Masse%), gemessen bei 23 °C gemäß ISO 3219 von 1993 (IUPAC: PDMS methylterminated, CAS: 63148-62-9)
- 4,4 g 2-Aminopropyltriethoxysilan (1,83 Masse %) (IUPAC: 3-Aminopropyltriethoxysilane, CAS: 919-30-2).

### Beispiel 5 - Herstellung einer ersten durch Kondensationsreaktion vernetzbaren Polymermasse A

In einem Papiertrinkbecher wurden die nachstehend aufgeführten Komponenten der Masse A mittels einer schmalen Spachtel einheitlich vermischt und in eine Schraubdeckeldose gefüllt und dann verschlossen unter Feuchtigkeitsausschluss gelagert.

35,7 g Zubereitung aus Beispiel 1, Lagerzeit: 2 Wochen bei Raumtemperatur unter Feuchtigkeitsausschluss (82,83 Masse%)
2,5 g Tetraethylsilikat (5,80 Masse%) (IUPAC: Tetraethyl orthosilicate, CAS: 78-10-4)
0,8 g Aminopropyltriethoxysilan (1,86 Masse%) (IUPAC: 3-Aminopropyltriethoxysilane, CAS: 919-30-2)
0,6 g Zink-bis(2-ethylhexanoat) (1,39 Masse%) (IUPAC: Zinc bis(2-ethylhexanoate), CAS: 136-53,8)
3,5 g Hydrophile, hochdisperse Kieselsäure (HDK® V15, Wacker Chemie; 8,12 Masse%) (IUPAC: Dioxosilane, CAS: 112945-52-5)

Die Konsistenz der Polymermasse am Tag nach der Herstellung sowie nach 4-wöchiger Lagerung bei Raumtemperatur unter Feuchtigkeitsausschluss war weich-pastös und standfest.

Die Hautbildungszeit betrug bei 23,9°C und 24 % relativer Luftfeuchtigkeit ca. 60 Minuten. Die Hautbildungszeit wurde dabei so bestimmt, dass die Oberfläche einer frisch ausgestrichenen Masse in Abständen von 3 Minuten mit der Spitze eines Bleistifts leicht berührt wird. Die Hautbildungszeit ist dann erreicht, wenn an der Spitze des Bleistifts keine Masse mehr hängen bleibt.

Nach 24 Stunden offener Lagerung (also unter Einfluss von Luftfeuchtigkeit) bei Raumtemperatur, 22°C, bildete sich eine elastische Haut mit trockener Oberfläche.

Die ShoreA Härte der ausgehärteten Polymermasse, gemessen nach DIN 53505-87, betrug 23.

Das Aussehen des entstandenen Silikonelastomers war leicht eingetrübt, transluzent.

### Beispiel 6 - Herstellung einer zweiten durch Kondensationsreaktion vernetzbaren Polymermasse B

In einem Papiertrinkbecher wurden die nachstehend aufgeführten Komponenten der Masse B mittels einer schmalen Spachtel einheitlich vermischt und in eine Schraubdeckeldose gefüllt und dann verschlossen unter Feuchtigkeitsausschluss gelagert.

35,5 g Zubereitung aus Beispiel 1, Lagerzeit: 2 Wochen bei Raumtemperatur unter Feuchtigkeitsausschluss (82,56 Masse%)
2,5 g Vinyltriethoxysilan (5,81 Masse%) (IUPAC: Vinyltriethoxysilane, CAS: 78-08-0)
0,3 g Aminopropyltriethoxysilan (0,70 Masse%) (IUPAC: 3-Aminopropyltriethoxysilane, CAS: 919-30-2)
0,6 g Zink-bis(2-ethylhexanoat), (1,40 Masse%) (IUPAC: Zinc bis(2-ethylhexanoate), CAS: 136-53,8)
4,1 g Hydrophile, hochdisperse Kieselsäure (HDK® V15, Wacker Chemie; 9,43 Masse%)
(IUPAC: Dioxosilane, CAS: 112945-52-5)

Die Konsistenz der Polymermasse am Tag nach der Herstellung sowie nach 4-wöchiger Lagerung bei Raumtemperatur unter Feuchtigkeitsausschluss war weich-pastös und standfest.

Die Hautbildungszeit betrug bei 23,9°C und 24 % relativer Luftfeuchtigkeit ca. 45 Minuten. Die Hautbildungszeit wurde wie vorstehend beschrieben gemessen.

Nach 6 Stunden offener Lagerung (also unter Einfluss von Luftfeuchtigkeit) bei Raumtemperatur, 22°C, bildete sich eine elastische Haut mit trockener Oberfläche.

Die ShoreA Härte der ausgehärteten Polymermasse, gemessen nach DIN 53505-87, betrug 26.

Das Aussehen des entstandenen Silikonelastomers war leicht eingetrübt, transparent.

### Beispiel 7 - Herstellung einer dritten durch Kondensationsreaktion vernetzbaren Polymermasse C

In einem Papiertrinkbecher wurden die nachstehend aufgeführten Komponenten der Masse C mittels einer schmalen Spachtel einheitlich vermischt und in eine Schraubdeckeldose gefüllt und dann verschlossen unter Feuchtigkeitsausschluss gelagert.

32,9 g Zubereitung aus Beispiel 2, Lagerzeit: 2 Wochen bei Raumtemperatur unter Feuchtigkeitsausschluss (78,33 Masse%)
2,2 g Vinyltriethoxysilan (5,24 Masse%) (IUPAC: Vinyltriethoxysilane, CAS: 78-08-0)
1,1 g 1,2 Bis-(triethoxysilyl)ethan (2,62 Masse%) (IUPAC 1,2-Bis(triethoxysilyl)ethane, CAS : 16068-37-4)
1,4 g Aminopropyltriethoxysilan (3,33 Masse%) (IUPAC: 3-Aminopropyltriethoxysilane, CAS: 919-30-2)
0,9 g Zink-bis(2-ethylhexanoat), (2,14 Masse%) (IUPAC: Zinc bis(2-ethylhexanoate), CAS: 136-53,8)
3,5 g Hydrophile, hochdisperse Kieselsäure (HDK® V15, Wacker Chemie; 8,33 Masse%)
(IUPAC: Dioxosilane, CAS: 112945-52-5)

Die Konsistenz der Polymermasse am Tag nach der Herstellung sowie nach 4-wöchiger Lagerung bei Raumtemperatur, 22°C, unter Feuchtigkeitsausschluss war weich-pastös und standfest.

Die Hautbildungszeit betrug bei 23,9°C und 24 % relativer Luftfeuchtigkeit ca. 60 Minuten. Die Hautbildungszeit wurde wie vorstehend beschrieben gemessen.

Nach 24 Stunden offener Lagerung (also unter Einfluss von Luftfeuchtigkeit, bei Raumtemperatur, 22°C, bildete sich eine elastische Haut mit trockener Oberfläche.

Die ShoreA Härte der ausgehärteten Polymermasse, gemessen nach DIN 53505-87, betrug 24.

Das Aussehen des entstandenen Silikonelastomers war weißlich eingetrübt.

### Beispiel 8 - Herstellung einer vierten durch Kondensationsreaktion vernetzbaren Polymermasse D

In einem Papiertrinkbecher wurden die nachstehend aufgeführten Komponenten der Masse D mittels einer schmalen Spachtel einheitlich vermischt und in eine Schraubdeckeldose gefüllt und dann verschlossen unter Feuchtigkeitsausschluss gelagert.

70,8 g Zubereitung aus Beispiel 3, Lagerzeit: 2 Wochen bei Raumtemperatur unter Feuchtigkeitsausschluss (83,29 Masse%),
7,0 g Hydrophile, hochdisperse Kieselsäure (HDK® V15, Wacker Chemie (8,24 Masse%) (IUPAC: Dioxosilane, CAS:112945-52-5),
4,0 g Tetraethylsilikat (4,71 Masse%) (IUPAC: Tetraethyl orthosilicate, CAS: 78-10-4),
1,3 g Aminopropyltriethoxysilan (1,53 Masse %) (IUPAC: 3-Aminopropyltriethoxysilane, CAS: 919-30-2),
1,9 g Zink-bis(2-ethylhexanoat) (2,24 Masse %) (IUPAC: Zinc bis(2-ethylhexanoate), CAS: 136-53-8).

Konsistenz 24 h nach der Herstellung: fließt von der Spachtel.

Zur Aushärtung wurden 40,0 g Masse D und 1,5 g destilliertes Wasser (3,75 Masse%) in einem Papiertrinkbecher vermischt und in eine mit Trennfolie ausgekleidete kleine Schraubflasche gefüllt und verschlossen gelagert. Nach 18 Stunden war der Inhalt der Schraubflasche trocken durchvulkanisiert.

Die Verarbeitungszeit wurde mit einer weiteren Probe der Masse bestimmt. Hierzu wurde ein Spatel in die Masse eingetaucht und wieder herausgezogen. Solange die Masse vom Spatel abfloss, war das Ende der Verarbeitungszeit noch nicht erreicht. Das Ende der Verarbeitungszeit war dann erreicht, wenn der Strang der abfließenden Masse abriss und sich etwas nach oben zurückzog und sich so verkürzte.

Die Verarbeitungszeit der Masse D nach dieser Methode betrug bei 25 °C und 23 % Relativer Luftfeuchtigkeit 35 Minuten.

### Beispiel 9 - Herstellung einer fünften durch Kondensationsreaktion vernetzbaren Polymermasse E

In einem Papiertrinkbecher wurden die nachstehend aufgeführten Komponenten der Masse E mittels einer schmalen Spachtel einheitlich vermischt und in eine Schraubdeckeldose gefüllt und dann verschlossen unter Feuchtigkeitsausschluss gelagert.

71,0 g Zubereitung aus Beispiel 4, Lagerzeit: 2 Wochen bei Raumtemperatur unter Feuchtigkeitsausschluss (83,33 Masse%),
7,0 g Hydrophile, hochdiperse Kieselsäure (HDK® V 15, Wacker Chemie (8,22 Masse%) (IUPAC: Dioxosilane, CAS: 11945-52-5),
4,0 g Vinyltriethoxysilan (4,69 Masse%) (IUPAC:Vinyltriethoxysilane, CAS: 78-08-0),
1,3 g Aminopropyltriethoxysilane (1,53 Masse%) (IUPAC: 3-Aminopropyltriethoxysilane, CAS: 919-30-2),
1,9 g Zink-bis(2-ethylhexanoat), (2,23 Masse%) (IUPAC: Zinc bis(2-ethylhexanoate), CAS: 136-53-8).

Konsistenz 24 h nach der Herstellung: fließt von der Spachtel.

Zur Aushärtung wurden 40,0 g der Masse E und 1,2 g destilliertes Wasser (3,00 Masse%) vermischt und in eine Schraubflasche gefüllt und verschlossen gelagert. Nach 36 Stunden war der Inhalt der Schraubflasche trocken durchvulkanisiert.

Verarbeitungszeit der Masse E bei 24,4 °C und 24 % Relativer Luftfeuchtigkeit: 75 Minuten, wobei die Verarbeitungszeit wie in Beispiel 8 angegeben bestimmt wurde.

### Beispiel 10 - Herstellung einer sechsten durch Kondensationsreaktion vernetzbaren Polymermasse F

In einem Papiertrinkbecher wurden die nachstehend aufgeführten Komponenten der Masse F mittels einer schmalen Spachtel einheitlich vermischt und in eine Schraubdeckeldose gefüllt und dann verschlossen unter Feuchtigkeitsausschluss gelagert.

71,8 g Zubereitung aus Beispiel 4, Lagerzeit bei Raumtemperatur: 2 Wochen unter Feuchtigkeitsausschluss (63,09 Masse%),
36,3 g Quarzmehl (31,90 Masse%) (IUPAC: Dioxosilane, CAS: 14808-60-7),
4,0 g kondensiertes Tetraethylsilikat mit einem Siliciumdioxidgehalt von 40 % (3,51 Masse%) (IUPAC: Ethyl polysilicate, CAS: 11099-06-2),
0,7 g Aminopropyltriethoxysilan (0,62 Masse%) (IUPAC: 3-Aminopropyltriethoxysilane, CAS: 919-3-2),
1,0 g Zink-bis(2-ethylhexanoat), (0,88Masse%) (IUPAC: Zinc bis(2-ethylhexanoate), CAS:136-53-8).

Konsistenz 24 h nach der Herstellung: fließt von der Spachtel.

Zur Aushärtung wurden 40,0 g der Masse F und 1,0 g destilliertes Wasser (2,50 Masse%) vermischt und in eine Schraubflasche gefüllt und verschlossen gelagert. Nach 6 Stunden war der Inhalt der Schraubflasche trocken durchvulkanisiert.

Die Verarbeitungszeit der Masse F bei 24,4 °C und 24 % Relativer Luftfeuchtigkeit, gemessen, wie in den vorstehenden Beispielen, betrug 15 Minuten.

### Beispiel 11 - Haftungstest

Mit den Massen aus den Beispielen 5 bis 7 wurde ein Haftungstest auf verschiedenen Unterlagen durchgeführt. Hierzu wurden die Massen mittels eines Spatels auf einen Untergrund aufgetragen und leicht angedrückt. Die durchschnittliche Schichtdicke betrug bis zu 3 mm.

Nach einer 7-tägigen Raumtemperaturlagerung bei 22°C unter 24% relativer Luftfeuchtigkeit wurde der Haftverbund überprüft. Die nachfolgende Tabelle gibt eine Übersicht über die entsprechenden Ergebnisse. Hierbei bedeutete "+": der vulkanisierte Auftrag konnte nur unter mechanischer Zerstörung vom jeweiligen Untergrund abgelöst werden. "-" bedeutete: der vulkanisierte Auftrag konnte rückstandsfrei vom jeweiligen Untergrund abgelöst werden.

| Untergrund | Beispiel 5 | Beispiel 6 | Beispiel 7 |
|---|---|---|---|
| Glas | + | + | + |
| Acrylglas (Plexiglas) | + | - | + |
| Kupferrohr | + | + | + |
| Fichtenholz, Latte | + | + | + |
| Polystyrol, Platte | + | + | + |
| Fliese, glasiert | + | + | + |
| Weißblech | + | + | + |
| Stahlplatte | + | + | + |
| PVC, Rohr | + | + | + |
| ABS, Platte | + | + | + |
| Aluminium, Folie | + | + | + |

### Beispiel 12 - Haftungstest

Mit den Massen aus den Beispielen 8 bis 10 wurde ein Haftungstest auf verschiedenen Unterlagen durchgeführt. Hierzu wurden die Massen mittels eines Spatels auf einen Untergrund aufgetragen und leicht angedrückt. Die durchschnittliche Schichtdicke betrug 1-2 mm.

Nach einer 2-tägigen Raumtemperaturlagerung bei 23°C unter 24% relativer Luftfeuchtigkeit wurde der Haftverbund überprüft. Die nachfolgende Tabelle gibt eine Übersicht über die entsprechenden Ergebnisse. Hierbei bedeutete "+": der vulkanisierte Auftrag konnte nur unter mechanischer Zerstörung vom jeweiligen Untergrund abgelöst werden. "-" bedeutete: der vulkanisierte Auftrag konnte rückstandsfrei vom jeweiligen Untergrund abgelöst werden.

| Untergrund | Beispiel 8 | Beispiel 9 | Beispiel 10 |
|---|---|---|---|
| Glas | nur Randhaftung | + | + |
| Acrylglas (Plexiglas) | + | + | - |
| Weißblech | + | + | + |
| Aluminiumfolie | + | + | + |
| Stahlplatte | + | + | + |
| Kupferrohr | + | + | + |
| Fliese, glasiert | - | + | - |
| Betonplatte | + | + | + |
| Fichtenholz, Latte | + | + | + |
| ABS, Platte | + | + | + |
| PVC, Rohr | + | + | - |
| Polystyrol platte | + | + | - |

### Beispiel 13 - Einfluss der Wasserdosierung auf das Vulkanisationsverhalten

Ferner wurde der Einfluss der Wasserdosierung auf das Vulkanisationsverhalten untersucht. Hierzu wurden unter Verwendung der Zubereitung aus Beispiel 3 nochmals ein Ansatz der Masse C hergestellt (Wiederholungsansatz der Masse C).

Zu 15 g dieses Wiederholungsansatzes wurden jeweils zugemischt:
1) Kein Zusatz
2) 0,2 g Wasser dest.
3) 0,4 g Wasser dest.
4) 0,6 g Wasser dest.

Die 4 Mischungen wurden jeweils in kleine, mit Trennfolie ausgekleidete Schraubverschlussdosen gegossen, wobei sich eine Schichtdicke von ca. 1 cm ergab. Nach einer Lagerzeit von 24 Stunden bei 24 °C und 23 % Relativer Luftfeuchtigkeit wurde der Vulkanisationszustand der Proben überprüft.

Es ergaben sich folgende Ergebnisse:
Probe 1: dünne trockene Haut, darunter noch plastisch.
Probe 2: dicke trockene Haut, darunter untervulkanisiert und stark klebrig.
Probe 3: durchvulkanisiert, Unterseite trocken.
Probe 4: durchvulkanisiert, Unterseite trocken.

Nach einer zusätzlichen Lagerzeit von weiteren 24 Stunden wurde der Vulkanisationszustand der Proben nochmals überprüft.

Es ergaben sich folgende Ergebnisse:
Probe 1: etwas dickere trockene Haut, darunter noch plastisch.
Probe 2: durchvulkanisiert, Unterseite trocken.
Probe 3: durchvulkanisiert, Unterseite trocken.
Probe 4: durchvulkanisiert, Unterseite trocken.

Interpretation: Die Tiefschichtvulkanisation wird durch den Zusatz von Wasser beschleunigt.

### Beispiel 14 - Herstellung von fließfähigen Massen mit hochdisperser Kieselsäure (Wacker, HDK® V 15)

Die Erzielung der Fließfähigkeit ist verfahrensbedingt:
Wurde die hydrophile, hochdisperse Kieselsäure am Schluss des Ansatzes eingemischt, dann ergab sich eine standfest-pastöse Konsistenz, so wie sie für Einkomponentenmassen erwünscht ist.

Mischte man die hydrophile, hochdiperse Kieselsäure in das vorgelegte Polymer unter Ausbildung einer "Steifen Phase" ein und erst nachträglich die dünnflüssigen Rezepturbestandteile (Vernetzer, Katalysator, ggf. Haftvermittler), dann bildete sich ein fließfähiges Endprodukt, wie es meist für Zweikomponentenmassen erwünscht ist.

Massen, die ausschließlich Quarzmehl enthielten, waren grundsätzlich fließfähig.

## Patentansprüche

1. Zubereitung zur Herstellung eines durch Kondensationsreaktion vernetzbaren Polymers enthaltend:
- mindestens ein Aminopropyltriethoxysilan und
- mindestens ein Polydialkylsiloxan mit zwei endständigen Hydroxylgruppen, das die nachfolgende Formel (1) aufweist:
HO-[-SiR₁R₂-O-]ₓ-OH Formel (1)
wobei in Formel (1) R₁ und R₂ gleich oder unterschiedlich sein können und ausgewählt sind aus Alkylgruppen mit 1 bis 8 Kohlenstoffatomen und wobei x eine ganze Zahl von 30 bis 2500 ist.

2. Zubereitung nach Anspruch 1, wobei das Aminopropyltriethoxysilan ausgewählt ist aus 3-Aminopropyltriethoxysilan, Cyclohexylaminopropyltriethoxysilan und N-(2-Aminoethyl)-3-aminopropyltriethoxysilan.

3. Zubereitung nach Anspruch 1 oder 2, wobei ein Masseverhältnis des Polydialkylsiloxans zum Aminopropyltriethoxysilan 20 : 1 bis 50 : 1 beträgt.

4. Zubereitung nach einem der Ansprüche 1 bis 3 ferner enthaltend mindestens einen Silikonweichmacher, wobei der Silikonweichmacher insbesondere ausgewählt ist aus trimethylsiloxyendständigen Polydimethylsiloxanen mit einer Viskosität bei 23 °C, gemessen nach ISO 3219 von 1993, von 35 bis 1000 mPa·s.

5. Durch Kondensationsreaktion vernetzbare Polymermasse enthaltend die Zubereitung nach einem der vorhergehenden Ansprüche, mindestens ein ethoxyfunktionales Vernetzungsmittel, insbesondere mindestens ein ethoxyfunktionales siliziumhaltiges Vernetzungsmittel, und mindestens ein weiteres Aminopropyltriethoxysilan.

6. Masse nach Anspruch 5, wobei das ethoxyfunktionale Vernetzungsmittel ausgewählt ist aus Methyltriethoxysilan, Vinyltriethoxysilan, Tetraethylsilikat, einem Teilhydrolysat von Tetraethylsilikat und 1,2-Bis-(triethoxysilyl)ethan.

7. Masse nach Anspruch 5 oder 6, ferner enthaltend mindestens einen Füllstoff und/oder einen Vernetzungskatalysator.

8. Masse nach Anspruch 7, wobei der Füllstoff ausgewählt ist aus Kreide, Quarzmehl und pyrogener oder hochdisperser Kieselsäure und/oder wobei der Vernetzungskatalysator ausgewählt ist aus Zink-bis(2-ethylhexanoat).

9. Verfahren zur Herstellung eines Silikonelastomers umfassend die Schritte:
- Herstellen einer Zubereitung zur Herstellung eines durch Kondensationsreaktion vernetzbaren Polymers durch Mischen:
▪ mindestens eines Aminopropyltriethoxysilans und
▪ mindestens eines Polydialkylsiloxans mit zwei endständigen Hydroxylgruppen, das die nachfolgende Formel (1) aufweist:
HO-[-SiR₁R₂-O-]ₓ-OH Formel (1)
wobei in Formel (1) R₁ und R₂ gleich oder unterschiedlich sein können und ausgewählt sind aus Alkylgruppen mit 1 bis 8 Kohlenstoffatomen und wobei x eine ganze Zahl von 30 bis 2500 ist;
- Lagern der Zubereitung unter Ausschluss von Feuchtigkeit bei Raumtemperatur für einen Zeitraum von mindestens 9 Tagen bis 12 Wochen;
- Zufügen mindestens eines ethoxyfunktionalen Vernetzungsmittels, insbesondere mindestens eines ethoxyfunktionalen siliziumhaltigen Vernetzungsmittels, und mindestens eines weiteren Aminopropyltriethoxysilans zu der gelagerten Zubereitung unter Erhalt einer Reaktionsmischung und
- Reagieren der Reaktionsmischung unter Einfluss von Feuchtigkeit mittels Kondensation des aminfunktionalisierten Polydialkylsiloxans, des Aminopropyltriethoxysilans und des ethoxyfunktionalen Vernetzungsmittels.

10. Verfahren nach Anspruch 9, ferner umfassend einen Schritt des Zufügens mindestens eines Vernetzungskatalysators zu der gelagerten Zubereitung.

11. Silikonelastomer, hergestellt nach einem Verfahren nach einem der Ansprüche 9 oder 10.
